# EUROPÄISCHE PATENTSCHRIFT

(11) **EP 4 530 096 B1**
(45) Veröffentlichungstag und Bekanntmachung des Hinweises auf die Patenterteilung: **15.04.2026**
(21) Anmeldenummer: 23199828.7
(22) Anmeldetag: 26.09.2023
(51) Int. Cl.: B60C 5/00, B60C 5/04

(54) **MEHRSCHICHTIGER LUFTSCHLAUCH FÜR FAHRZEUGREIFEN**
MULTI-LAYER AIR TUBE FOR VEHICLE TYRES
TUYAU D'AIR MULTICOUCHE POUR PNEUS DE VÉHICULE

(43) Veröffentlichungstag der Anmeldung: 02.04.2025
(73) Patentinhaber: Isovolta AG, 2355 Wiener Neudorf (AT)
(72) Erfinder: Zechner, Christian, 8962 Gröbming (AT); Pertl, Peter, 8042 Graz (AT)
(74) Vertreter: Schwarz & Partner Patentanwälte GmbH

(56) Entgegenhaltungen:
- DE-A1- 102017 118 314
- GB-A- 216 045
- GB-A- 521 583
- JP-A- S62 249 737
- JP-A- S63 195 003

## Beschreibung

Die vorliegende Erfindung betrifft einen mehrschichtiger Luftschlauch für Fahrzeugreifen.

### Hintergrund der Erfindung

Reifen für Fahrzeuge bestehen üblicherweise aus einem Mantel, einer Felge und einem luftgefüllten Schlauch, welcher zwischen Felge und Mantel positioniert ist.

Der Mantel als äußerer Teil des Fahrzeugreifens hält den Reifen formstabil und überträgt Beschleunigungs-, Brems- und Seitenführungskräfte auf den Untergrund.

Der Schlauch ist zur Befüllung mit Luft mit einem Ventil versehen und hält den Innendruck aufrecht.

Luftschläuche für Fahrzeugreifen weisen vorzugsweise ein geringes Gewicht sowie in Zusammenspiel mit dem Mantel einen geringen Rollwiderstand auf, um auftretende Verlustreibungen während der Fahrt zu reduzieren. Um die Pannensicherheit des luftführenden Schlauches zu gewährleisten, müssen Schläuche ferner luftdicht und widerstandsfähig gegenüber Beschädigungen sein.

Um das Gewicht von Luftschläuchen zu reduzieren und Verlustreibungen zu vermeiden, kann bekanntermaßen die Wandstärke des Schlauches verringert werden. Im Falle einer verringerten Wandstärke verschlechtern sich hingegen andere Eigenschaften wie z.B. die Lufthaltigkeit oder Widerstandsfähigkeit des Schlauchs und somit die Pannensicherheit.

Dadurch können Beschädigungen des Schlauches wie etwa durch Durchstiche, Einklemmungen, Alterung oder falscher Luftdruck zum ungewollten Austritt von Luft aus dem Schlauch führen.

Zu diesem Zwecke können bestimmte Materialien herangezogen werden, um die Eigenschaften von Luftschläuchen zu verbessern.

Butylkautschuk ist beispielsweise ein gängiges Material für Fahrzeugschläuche. Butylschläuche sind günstig in der Anschaffung, langlebig und verlieren nur langsam Luft.

Aufgrund des vergleichsweisen hohen Gewichts von Butylschläuchen führen Schläuche aus diesem Material hingegen zu einem höheren Rollwiderstand als andere Materialien.

Um Gewicht einzusparen und den Rollwiderstand des Reifens zu reduzieren, können Latex oder thermoplastische Elastomere, unter anderem thermoplastisches Polyurethan (TPU), anstatt von Butylkautschuk für Luftschläuche eingesetzt werden.

TPU-Schläuche wiegen etwa ein Viertel von kautschukbasierten Alternativen und weisen ein deutlich geringeres Packmaß bei dennoch guter Stabilität und Lufthaltigkeit auf.

Latex ist flexibler als Butylkautschuk oder TPU und weist einen geringen Rollwiderstand auf. Luft kann aber durch das Material vergleichsweise schnell entweichen, sodass Latexschläuche oft aufgepumpt werden müssen. Latexschläuche sind in der Regel leichter als Butylschläuche, zeichnen sich hingegen durch einen vergleichsweisen hohen Preis und Wartungsaufwand aus.

Weiters sind mehrlagige Schläuche mit einer Innen- und einer Außenschicht bekannt. Solche mehrlagigen Schläuche sollen verbesserte Eigenschaften wie z.B. eine erhöhte Lufthaltigkeit und Pannensicherheit im Gegensatz zu einlagigen Schläuchen aufweisen.

Dennoch können auch mehrlagige Schläuche durch Durchstiche, Einklemmungen, etc. massiv beschädigt werden. Dieser Umstand liegt darin begründet, dass spitze oder kantige Gegenstände die Innen- und Außenschicht trotz der mehrlagigen Anordnung durchdringen können, wodurch der gesamte Schlauch durch Rissfortpflanzung beschädigt wird, und wiederum Luft austreten kann.

Um die Pannensicherheit von mehrlagigen Schläuchen zu erhöhen, können beispielsweise Schläuche mit einer oder mehreren Zwischenschichten ausgestattet werden.

In der DE 102017118314 Al ist ein mehrlagiger Schlauch für ein Fahrzeugrad offenbart, welche eine Innenschicht und/oder die Außenschicht aus TPU umfasst, um gegenüber bekannten Butyl-Schläuchen das Gewicht zu vermindern und Lufthaltigkeit zu erhöhen. Zudem kann der Schlauch eine Zwischenschicht aus einem Ethylen-Vinylalkohol-Copolymer, einem Gel oder thermoplastischem Polyurethan aufweisen, um die Pannensicherheit des Schlauches zu steigern.

Weitere mehrlagige Schläuche sind aus den Dokumenten JP S62249737A, JP S63 195003A und GB 216045A bekannt.

### Zusammenfassung der Erfindung

Der vorliegenden Erfindung liegt die Aufgabe zugrunde, einen Luftschlauch für Fahrzeugreifen mit hoher Pannensicherheit und geringen Gewicht zur Verfügung zu stellen.

Die Aufgabe wird gelöst durch einen mehrschichtigen Luftschlauch für Fahrzeugreifen, insbesondere für Reifen für Fahrräder, mit zumindest einer ersten und einer zweiten geschlossenen Schicht aus Polymermaterial, gekennzeichnet durch zumindest eine Schicht aus geschäumtem Polymermaterial, welche zwischen der ersten und der zweiten geschlossenen Schicht angeordnet ist.

### Kurzbeschreibung der Figuren

Figur 1 zeigt den schematischen Aufbau des erfindungsgemäßen mehrschichtigen Luftschlauchs, wobei das geschäumte Polymermaterial 2 zwischen einer geschlossenen Außenschicht 1 und einer geschlossenen Innenschicht 3 angeordnet ist.
Figur 2 zeigt den schematischen Querschnitt des luftführenden Schlauches gemäß der vorliegenden Erfindung umfassend eine Schicht aus geschäumten Polymermaterial 2, eine geschlossene Außenschicht 1 und eine geschlossene Innenschicht 3.
Figur 3 zeigt den schematischen Aufbau des erfindungsgemäßen mehrschichtigen Luftschlauchs mit einer Außenschicht 1, Innenschicht 3 und mehreren Schichten des geschäumten Polymermaterials 2, welche durch eine geschlossene Zwischenschicht 5 voneinander getrennt sind.
Figur 4 zeigt den schematischen Aufbau des erfindungsgemäßen mehrschichtigen Luftschlauchs, wobei das geschäumte Polymermaterial 2 zwischen einer geschlossenen Außenschicht 1, einer geschlossenen Innenschicht 3 und zwei geschlossenen Zwischenschichten 5 angeordnet ist.
Figur 5 zeigt den schematischen Aufbau des erfindungsgemäßen mehrschichtigen Luftschlauchs mit einer Innenschicht 3 und mehreren Schichten des geschäumtem Polymermaterials 2, welche durch eine geschlossene Zwischenschicht 5 voneinander getrennt sind. Bei dieser Anordnung bildet eine der geschäumten Schichten 2 die Außenschicht.

### Beschreibung der Ausführungsformen

Unter dem Begriff "geschäumtem Polymermaterial" ist ein Polymermaterial zu verstehen, dessen Dichte durch die Anwesenheit zahlreicher, in seiner Masse verteilter und durch Schäumen entstandener kleiner offener oder geschlossener Hohlräume (Poren) verringert ist. Das Schäumen von Polymermaterial ist dem Fachmann bekannt und kann physikalisch oder chemisch durchgeführt werden.

Es hat sich überraschenderweise gezeigt, dass durch die Anordnung des geschäumten Polymermaterials zwischen einer ersten und einer zweiten geschlossenen Schicht hohe Wandstärken eines Luftschlauchs bei geringer Gewichtszunahme erzielt werden können. Der mehrschichtige Luftschlauch hat sich für Fahrzeugreifen, insbesondere für Reifen für Fahrräder als besonders vorteilhaft erwiesen.

Der Begriff "geschlossene Schicht" bedeutet eine kontinuierliche Schicht aus Polymermaterial ohne Lücken oder Hohlräume. Die geschlossenen Schichten der vorliegenden Erfindung weisen vorzugsweise eine höhere Dichte als die Schicht aus dem geschäumten Polymermaterial auf.

Durch die Trennung der beiden geschlossenen Schichten durch das geschäumte Polymermaterial wird die Widerstandsfestigkeit des erfindungsgemäßen Schlauches im Gegensatz zu Schläuchen ohne geschäumter Innenlage erhöht. Die erfindungsgemäße Anordnung der einzelnen Schichten bewirkt ein Eingrenzen von auftretenden Beschädigungen wie z.B. Risse oder Durchstöße auf eine geschlossenen Schicht, da die geschlossenen Schichten des Luftschlauches durch das geschäumte Polymermaterial weitgehend voneinander entkoppelt sind.

Das geschäumte Polymermaterial verhindert somit weitere Beschädigungen an zumindest einer zweiten geschlossenen Schicht. Im Falle des Eindringens eines Gegenstandes oder durch das Quetschen des Luftschlauches ist es durch den mehrlagigen Aufbau des erfindungsgemäßen Schlauches daher deutlich schwieriger, alle Schichten zu durchdringen bzw. zu beschädigen. Der Aufbau des erfindungsgemäßen Luftschlauchs hat ferner den Vorteil, dass der Luftschlauch durch das geschäumte Polymermaterial zusätzlich gedämpft wird, was in Folge zu weniger Beschädigungen führt und die Pannensicherheit des Schlauches erhöht.

Überraschenderweise hat sich gezeigt, dass die Rauheit des Schlauchs durch die Schicht aus geschäumten Polymermaterial erhöht werden kann. Insbesondere durch die Größe der Poren des geschäumten Polymermaterials kann die Rauheit des Schlauchs beeinflusst werden. Es hat sich herausgestellt, dass die Rauheit des Schlauches mit der Größe der Poren des Materials zunimmt.

Die Größe der Poren kann typischerweise durch die Bedingungen des Schäumungsverfahrens beeinflusst werden. Solche Verfahren und deren Einfluss auf die Porengröße sind dem Fachmann bekannt. Beispielsweise ist bekannt, dass die Zugabe von Schäumungsmittel die Porengröße beeinflussen kann.

Eine höhere Rauheit des Schlauches hat den Vorteil, dass der Schlauch bei der Montage durch optimierte Gleiteigenschaften besser zwischen Felge und Mantel eingefügt werden kann und die Abriebfestigkeit des Schlauches erhöht wird.

Durch die Schichtdicke der geschlossenen Schichten kann die Rauheit des Schlauches ebenfalls beeinflusst werden. Je dicker mindestens eine geschlossene Schicht ist, desto mehr wird die Rauheit des Schlauches verringert. Vorzugsweise sind die geschlossenen Schichten derart ausgestaltet, dass die Rauheit des Schlauches nicht reduziert wird.

Der erfindungsgemäße Schlauch hat, unabhängig von den Dicken der geschlossenen Schichten, jedenfalls den Vorteil, dass durch die mehrlagige Anordnung der einzelnen Schichten das Risiko einer Beschädigung aller Schichten deutlich reduziert wird.

Unter dem Begriff "Rauheit" wird die vertikale Abweichung der realen Oberfläche von ihrer idealen Form verstanden. Die Rauheit der gegenständlichen Erfindung wird durch Messung des Rₐ-Wertes nach ISO 25178 bestimmt. Der "Rₐ-Wert" entspricht dem arithmetischen Mittel aller Abweichungen des Rauheitsprofils entlang der Bezugsstrecke. In den ISO-Normen wird hierfür der Begriff "CLA" (centre line average) benutzt. Beide Begriffe, "Rₐ-Wert" und "CLA" sind gleichbedeutend. Gemäß der vorliegenden Erfindung wird der Rₐ-Wert vorzugsweise durch ein herkömmliches Rauheitsmessgerät nach dem Verfahren gemäß ISO 25178 bestimmt, beispielsweise mit Gerät der Type "MarSurf PS10" (Hersteller: Fa. Mahr).

In einer vorteilhaften Ausführungsform der vorliegenden Erfindung bildet eine der beiden geschlossenen Schichten eine Außenschicht des Schlauchs. Die Außenschicht steht mit der äußeren Umgebung des Schlauchs, vorzugsweise mit dem Mantel in Kontakt.

Vorzugsweise bildet eine der beiden geschlossenen Schichten eine Innenschicht des Schlauchs. Die Innenschicht des Schlauches ist derart angeordnet, sodass diese mit dem luftgefüllten Hohlraum des Schlauches in Kontakt steht.

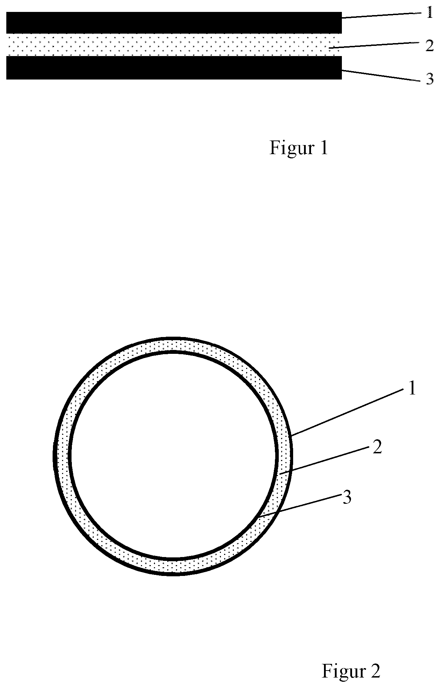

Die Figuren 1 und 2 zeigen eine Ausführungsform, bei welcher eine geschlossene Schicht eine Außenschicht 1 und eine zweite geschlossenen Schicht eine Innenschicht 3 zwischen einem geschäumtem Polymermaterial 2 des Schlauchs bilden.

Die außen- und innenliegenden Polymerschichten 1,3 übernehmen dabei die Aufgabe, den Schlauch luftdicht zu halten.

Es hat sich als besonders vorteilhaft herausgestellt, wenn die Schicht des geschäumten Polymermaterials so dick wie möglich und die Außenschicht so dick wie nötig ist.

Eine besonders bevorzugte Ausführungsform des Verfahrens ist dadurch gekennzeichnet, dass der Innenschicht des Schlauchs eine Schichtdicke von 0,1 mm und mehr, insbesondere bis 2 mm, aufweist.

Vorzugsweise weist die Außenschicht des erfindungsgemäßen Schlauchs eine Schichtdicke von 0,05 bis 1 mm auf.

In einer weiteren bevorzugten Ausführungsform liegt die Schichtdicke des geschäumten Polymermaterials zwischen 0,1 und 1,5 mm.

In einer weiteren Ausführungsform der vorliegenden Erfindung ist der Luftschlauch durch das Vorhandensein einer oder mehrerer weiterer geschlossenen Schichten und/oder einer oder mehrerer weiterer Schichten aus geschäumtem Polymermaterial gekennzeichnet.

Mehrlagige Aufbauten des erfindungsgemäßen Schlauches können dabei sowohl symmetrisch als auch unsymmetrisch ausgeführt sein, falls zusätzliche funktionelle Schichten für verbesserte Lagenhaftung, optimierte Lufthaltigkeit oder erhöhte Robustheit benötigt werden.

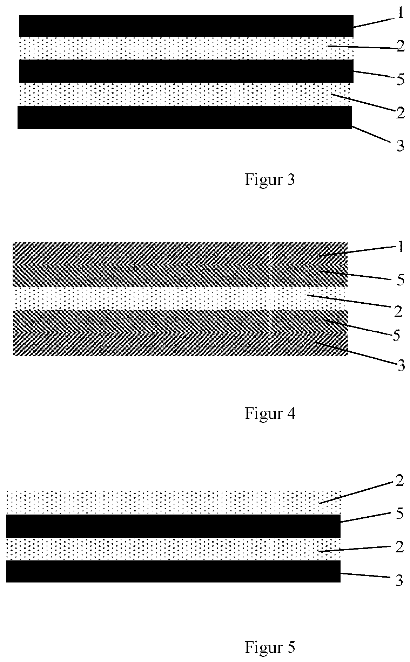

Eine Variante der Gestaltung des erfindungsgemäßen Schlauchs zeigt Figur 3. Der Luftschlauch umfasst zwei Schichten bestehend aus einem Polymermaterial 2, welche durch eine geschlossene Zwischenschicht 5 voneinander getrennt sind. Der Luftschlauch wird durch eine geschlossene Außenschicht 1 und eine geschlossene Innenschicht 3 begrenzt.

Eine andere Ausführungsform ist in Figur 4 dargestellt, welche einen mehrlagigen Luftschlauch betrifft, der eine geschlossene Außen- und Innenschicht 1,3 sowie zwei geschlossene Zwischenschichten 5 umfasst. Die Schicht aus geschäumtem Polymermaterial 2 ist zwischen der ersten und zweiten geschlossenen Zwischenschicht 5 angeordnet.

Vorzugsweise kann eine weitere Schicht aus geschäumtem Polymermaterial eine Außenschicht des Schlauchs bilden. Die geschäumte Außenschicht kann dabei in Kontakt mit dem Mantel stehen.

Ferner kann eine weitere Schicht aus geschäumtem Polymermaterial eine Innenschicht des Schlauchs bilden.

Figur 5 zeigt eine weitere bevorzugte Ausführungsform des erfindungsgemäßen Schlauchs umfassend zwei Schichten des geschäumtem Polymermaterials 2, welche durch eine nicht geschäumte geschlossene Zwischenschicht 5 voneinander getrennt sind. Der Luftschlauch gemäß dieser Ausführungsform wird durch eine geschlossene Innenschicht 3 und durch eine geschäumte Schicht 2 als Außenschicht begrenzt.

Vorzugsweise enthält das Material der geschlossenen Schichten thermoplastisches Polyurethan oder besteht aus thermoplastischem Polyurethan.

Das Material zumindest einer geschlossenen Schicht kann sich von dem Material einer anderen geschlossen Schicht unterscheiden.

In einer besonders vorteilhaften Ausführungsform ist das Polymermaterial ein thermoplastisches Polymermaterial.

Das thermoplastische Polymermaterial ist vorzugsweise ausgewählt aus der Gruppe bestehend aus thermoplastischem Polyurethan, thermoplastischem Vulkanisat, thermoplastischem Styrol-Blockcopolymer und thermoplastischem Polyamidelastomer.

In einer weiteren Ausführungsform der vorliegenden Erfindung ist der Luftschlauch durch eine Rauheit Rₐ der Außenschicht oder der Innenschicht von 0,5 µm und mehr, insbesondere von 0,8 µm bis 25 µm, gemessen nach ISO 25178 gekennzeichnet.

Aus dem Stand der Technik ist bekannt, dass Fahrzeugschläuche aus thermoplastischen Polymermaterial Rₐ-Werte im Bereich von wenigen Zehntel Mikrometern aufweisen. Zumindest eine Außenschicht oder Innenschicht des erfindungsgemäße Luftschlauchs weist durch das Vorhandensein des geschäumtem Polymermaterial Rₐ-Werte von mehreren Mikrometern auf. Ein höherer Rₐ-Wert ermöglicht eine vorteilhafte Anwendungsmöglichkeit eine höhere Oberflächenrauigkeit des Schlauches zu erreichen, welche zusätzliche Vorteile beim Einbau, sowie beim Abrollverhalten des Schlauches mit sich bringt.

## Patentansprüche

1. Mehrschichtiger Luftschlauch für Fahrzeugreifen, insbesondere für Reifen für Fahrräder, mit zumindest einer ersten und einer zweiten geschlossenen Schicht (1,3) aus Polymermaterial, **gekennzeichnet durch** zumindest eine Schicht aus geschäumtem Polymermaterial (2), welche zwischen der ersten und der zweiten geschlossenen Schicht (1,3) angeordnet ist.

2. Luftschlauch gemäß Anspruch 1, **dadurch gekennzeichnet, dass** eine der beiden geschlossenen Schichten eine Außenschicht (1) des Schlauchs bildet.

3. Luftschlauch gemäß Anspruch 1 oder 2, **dadurch gekennzeichnet, dass** eine der beiden geschlossenen Schichten eine Innenschicht (3) des Schlauchs bildet.

4. Luftschlauch gemäß einem der vorherigen Ansprüche, **gekennzeichnet durch** das Vorhandensein einer oder mehrerer weiterer geschlossenen Schichten (5) und/oder einer oder mehrerer weiterer Schichten aus geschäumtem Polymermaterial (2).

5. Luftschlauch gemäß einem Ansprüche 1, 3 und 4, **dadurch gekennzeichnet, dass** eine weitere Schicht aus geschäumtem Polymermaterial (2) eine Außenschicht des Schlauchs bildet.

6. Luftschlauch gemäß einem der Ansprüche 1, 2 und 4, **dadurch gekennzeichnet, dass** eine weitere Schicht aus geschäumtem Polymermaterial (2) eine Innenschicht des Schlauchs bildet.

7. Luftschlauch gemäß einem der vorherigen Ansprüche, **dadurch gekennzeichnet, dass** das Material der geschlossenen Schichten (1,3,5) thermoplastisches Polyurethan enthält oder aus thermoplastischem Polyurethan besteht.

8. Luftschlauch gemäß einem der vorherigen Ansprüche, **dadurch gekennzeichnet, dass** das geschäumte Polymermaterial (2) ein thermoplastisches Polymermaterial ist.

9. Luftschlauch gemäß Anspruch 8, **dadurch gekennzeichnet, dass** das thermoplastische Polymermaterial ausgewählt aus der Gruppe bestehend aus thermoplastischem Polyurethan, thermoplastischem Vulkanisat, thermoplastischem Styrol-Blockcopolymer, thermoplastischem Polyamidelastomer und Mischungen daraus ist.

10. Luftschlauch gemäß einem der vorherigen Ansprüche, **gekennzeichnet durch** eine Rauheit Rₐ der Außenschicht (1) oder der Innenschicht (3) von 0,5 µm und mehr, insbesondere von 0,8 µm bis 25 µm, gemessen nach ISO 25178.

## Claims

1. A multi-layer air hose for vehicle tyres, in particular for tyres for bicycles, with at least a first and a second closed layer (1, 3) made of polymer material, **characterized by** at least one layer made of a foamed polymer material (2), which is arranged between the first and the second closed layer (1, 3).

2. The air hose according to claim 1, **characterized in that** one of the two closed layers forms an outer layer (1) of the hose.

3. The air hose according to claim 1 or 2, **characterized in that** one of the two closed layers forms an inner layer (3) of the hose.

4. The air hose according to any of the preceding claims, **characterized by** the presence of one or more further closed layers (5) and/or one or more further layers of foamed polymer material (2).

5. The air hose according to any of claims 1, 3 and 4, **characterized in that** a further layer of foamed polymer material (2) forms an outer layer of the hose.

6. The air hose according to any of claims 1, 2 and 4, **characterized in that** a further layer of foamed polymer material (2) forms an inner layer of the hose.

7. The air hose according to any of the preceding claims, **characterized in that** the material of the closed layers (1, 3, 5) contains thermoplastic polyurethane or consists of thermoplastic polyurethane.

8. The air hose according to any of the preceding claims, **characterized in that** the foamed polymer material (2) is a thermoplastic polymer material.

9. The air hose according to claim 8, **characterized in that** the thermoplastic polymer material is selected from the group consisting of thermoplastic polyurethane, thermoplastic vulcanisate, thermoplastic styrene block copolymer, thermoplastic polyamide elastomer and mixtures thereof.

10. The air hose according to any of the preceding claims, **characterized by** a roughness Rₐ of the outer layer (1) or the inner layer (3) of 0.5 µm and more, in particular of 0.8 µm to 25 µm, measured according to ISO 25178.

## Revendications

1. Tuyau d'air multicouche pour pneumatiques de véhicules, en particulier pour pneus de bicyclettes, comprenant au moins une première et une deuxième couche fermée (1, 3) en matériau polymère, **caractérisé par** au moins une couche en matériau polymère expansé (2) disposée entre la première et la deuxième couche fermée (1, 3).

2. Tuyau d'air selon la revendication 1, **caractérisé en ce que** l'une des deux couches fermées constitue une couche extérieure (1) du tuyau.

3. Tuyau d'air selon la revendication 1 ou 2, **caractérisé en ce que** l'une des deux couches fermées constitue une couche intérieure (3) du tuyau.

4. Tuyau d'air selon l'une des revendications précédentes, **caractérisé par** la présence d'une ou plusieurs couches fermées supplémentaires (5) et/ou d'une ou plusieurs couches supplémentaires en matériau polymère expansé (2).

5. Tuyau d'air selon l'une des revendications 1, 3 et 4, **caractérisé en ce qu'**une couche supplémentaire en matériau polymère expansé (2) constitue une couche extérieure du tuyau.

6. Tuyau d'air selon l'une des revendications 1, 2 et 4, **caractérisé en ce qu'**une couche supplémentaire en matériau polymère expansé (2) constitue une couche intérieure du tuyau.

7. Tuyau d'air selon l'une des revendications précédentes, **caractérisé en ce que** le matériau des couches fermées (1, 3, 5) contient polyuréthane thermoplastique ou est constitué de polyuréthane thermoplastique.

8. Tuyau d'air selon l'une des revendications précédentes, **caractérisé en ce que** le matériau polymère expansé (2) est un matériau polymère thermoplastique.

9. Tuyau d'air selon la revendication 8, **caractérisé en ce que** le matériau polymère thermoplastique est choisi dans le groupe consistant en le polyuréthane thermoplastique, le vulcanisat thermoplastique, le copolymère thermoplastique à blocs de styrène, l'élastomère de polyamide thermoplastique et leurs mélanges.

10. Tuyau d'air selon l'une des revendications précédentes, **caractérisé par** une rugosité Rₐ de la couche extérieure (1) ou de la couche intérieure (3) de 0,5 µm et plus, en particulier de 0,8 µm à 25 µm, mesurée selon la norme ISO 25178.
